# FASCICULE DE BREVET EUROPEEN

(11) **EP 0 377 360 B1**
(45) Date de publication et mention de la délivrance du brevet: **17.08.1994**
(21) Numéro de dépôt: 89403425.5
(22) Date de dépôt: 11.12.1989
(51) Int. Cl.: H04L 12/56, H04L 12/46

(54) **Procédé de routage de messages dans un réseau à plusieurs canaux de transmission différents**
Leitweglenkungsverfahren von Paketen in einem Netz mit einer Vielzahl von verschiedenen Übertragungskanälen
Packet-routing method in a network with a plurality of different transmission channels

(30) Priorité: 15.12.1988 FR 8816550
(43) Date de publication de la demande: 11.07.1990
(73) Titulaire: LABORATOIRE EUROPEEN DE RECHERCHES ELECTRONIQUES AVANCEES, 92400 Courbevoie (FR)
(72) Inventeur: Saini, Jasjit Singh, F-92045 Paris la Défense (FR); Troian, Pierre, F-92045 Paris la Défense (FR)
(74) Mandataire: Chaverneff, Vladimir

(56) Documents cités:
- WO-A-84/00266
- FR-A- 2 320 022
- IEEE NETWORK, vol. 2, no. 1, janvier 1988, pages 33-36, IEEE, New York, US; M.C. HAMNER et al.: "Source routing bridge implementation"

## Description

La présente invention se rapporte à un réseau de communication comportant un procédé de routage de messages dans un réseau à plusieurs canaux de transmission différents.

Un grand nombre d'organes pouvant être aussi bien des émetteurs que des récepteurs de messages peut être organisé de différentes façons.

Une façon consiste à utiliser plusieurs voies de communication. Chacune de ces voies est souvent appelée "bus". Chaque organe du réseau désirant correspondre avec un autre organe de ce réseau envoie généralement un paquet d'informations comportant en plus de la partie "données à transmettre", des informations de "routage" indiquant les passages entre des voies de communication différentes et éventuellement l'identité de l'organe émetteur, et des informations diverses (codes de correction d'erreurs, accusé de réception, etc...). Un tel réseau fonctionne correctement, mais lorsque l'on utilise des organes simples destinés au grand public (capteurs, lampes, etc) il faut leur adjoindre des moyens de mémorisation de routage et faire leur "apprentissage" c'est-à-dire entrer ces informations de routage, ce qui augmente nettement leur prix et leur complexité.

L'apprentissage des informations de routage peut aussi se faire au moment où un message doit être émis. Selon certains procédés, notamment ceux décrits dans "Source Routing Bridge implementation" (8302 IEEE Network 2 1988 Jan. No. 1) et dans la demande PCT/US83/00042, un message d'initialisation est envoyé vers l'organe destinataire, ce message accumulant les informations de routage lors de son cheminement vers l'organe destinataire. Celui-ci mémorise alors les informations et renvoie celles-ci vers l'organe d'origine.

On connaît un protocole de transmission pour un tel réseau d'après le document "EUREKA 84 Integrated Home Systems Project", ISO/IEC ITC1/SC83/WG1 N28 83/WG1 (RYAN 2) de juillet 1988 ou bien d'après le document japonais "Home Bus System" (HB.S)ISO/IEC ITC1 /SC83/WG1 N42 de septembre 1988.

La présente invention a pour objet un procédé de routage de message dans un réseau à plusieurs canaux de transmission différents, plusieurs organes différents pouvant être rattachés à chaque canal de transmission, un organe rattaché à un canal pouvant communiquer avec un autre organe de n'importe quel canal du réseau.

Le procédé de l'invention consiste en un procédé de routage de messages comportant les adresses de l'organe émetteur et de l'organe destinataire dans un réseau de plusieurs canaux de transmission différents, plusieurs organes différents pouvant être rattachés à chaque canal de transmission, les différents canaux étant reliés entre eux par des points de transition, un organe rattaché à un canal pouvant communiquer avec un autre organe de n'importe quel canal de réseau, caractérisé en ce que l'on ajoute dans chaque message envoyé par un organe au moins un espace d'identification de points de transition à chaque passage d'un tel point de transition, si ledit message ne contient pas d'information de routage lorsqu'il est émis, et en ce que lorsque les organes sont simples, ces derniers ne mémorisent pas lesdites informations de routage.

Selon un aspect du procédé de l'invention, l'organe récepteur renvoie immédiatement une réponse à un message en y incluant des champs de routage réduits du message reçu.

La présente invention sera mieux comprise à la lecture de la description détaillée d'un mode de mise en oeuvre du procédé, pris à titre d'exemple non limitatif et illustré par le dessin annexé, sur lequel :
- la figure 1 est un bloc diagramme simplifié d'un réseau de transmission auquel s'applique le procédé de l'invention, et
- la figure 2 est un exemple de message conforme à l'invention.

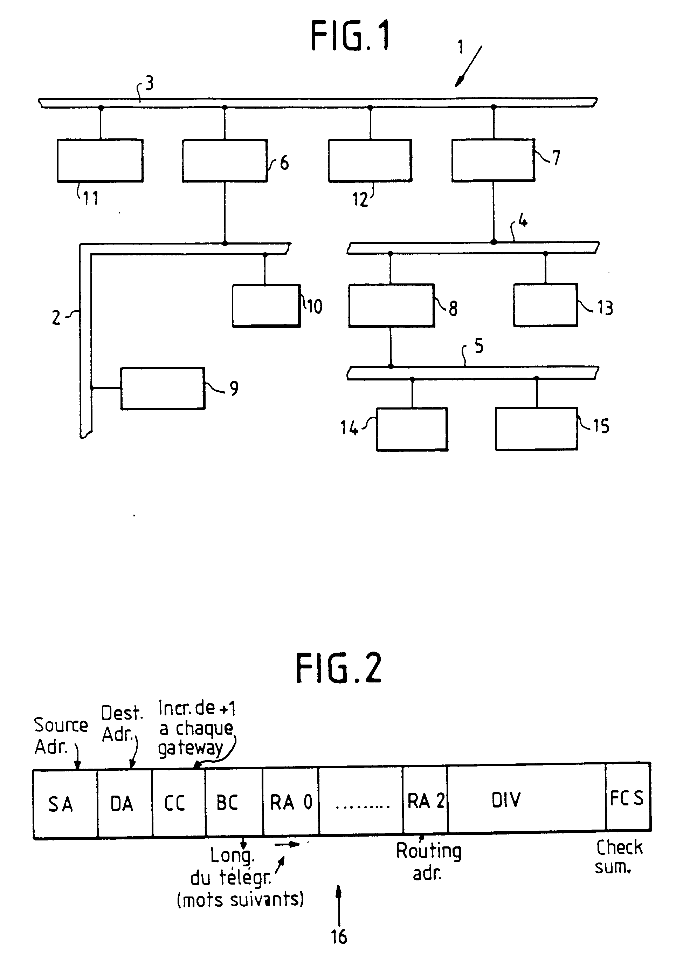

Le réseau 1 de transmission de messages représenté partiellement sur la figure 1 par exemple le réseau de domotique ("Integrated Home System" en anglais) d'un appartement. Un tel réseau de domotique permet d'interconnecter pratiquement tous les appareils électroniques et électriques d'un appartement : système de surveillance, appareils électroménagers, audio, vidéo etc... Etant donné que ces appareils sont de natures différentes et transmettent des signaux de caractéristiques différentes, ils n'envoient ou ne reçoivent généralement pas leurs signaux utiles (signaux d'alarme, signaux de télécommandes, images, son...) par les mêmes canaux de transmission. Ces canaux peuvent être de natures différentes selon ces signaux utiles : paires de fils torsadés, câbles coaxiaux, fibres optiques, liaisons haute fréquence, infra-rouges ...

Le réseau 1 comporte quatre canaux de transmission différents référencés 2 à 5 respectivement. Ces canaux peuvent être tous de natures différentes, ou certains d'entre eux peuvent être de même nature. Dans le cas où par exemple deux canaux sont de même nature, par exemple des paires de fils torsadés, ils ne sont pas directement reliés entre eux pour diverses raisons : isolation galvanique nécessaire entre eux (tensions différentes ou appareils devant être isolés entre eux), trop grand nombre d'appareils utilisateurs pour pouvoir être reliés à seul canal (complexité d'adressage), parasites etc...

Les différents canaux 2 à 5 sont reliés entre eux par des points de transition ou des interfaces appropriées : interface 6 entre les canaux 2 et 3, interface 7 entre les canaux 3 et 4, et interface 8 entre les canaux 4 et 5.

Sur la figure 1, on a représenté seulement quelques uns des organes reliés aux canaux 2 à 5. Ce sont respectivement les organes 9 et 10 pour le canal 2, les interfaces 11 et 12 pour le canal 3, l'interface 13 pour le canal 4, et les interfaces 14 et 15 pour le canal 5.

Pour communiquer entre eux, les utilisateurs du réseau 1 envoient des messages sous forme de paquet de données. Chaque paquet se présente généralement sous la forme du paquet 16 représenté en figure 2. Il est bien entendu que cette forme n'est prise qu'à titre d'exemple et peut varier.

Le paquet 16 comporte plusieurs "champs" ou mots de code successifs. Ces champs sont, dans l'ordre d'émission :
- SA : adresse de la source, c'est-à-dire de l'organe émettant le message
- DA : adresse du destinataire du message
- CC : nombre d'interfaces franchies par le message depuis son départ de l'émetteur
- BC : longueur du paquet au-delà du champ BC
- RA0 à RA2 : identité des interfaces franchies et/ou identité des canaux franchis. Ces trois champs n'existent pas au départ de l'organe émetteur si celui-ci n'est pas un organe "intelligent" (un organe sans moyens de mémorisation, un capteur par exemple). Dans le cas contraire (par exemple centrale de sécurité) ces champs sont présents lors de l'émission du message. Dans l'exemple décrit ici d'un organe non intelligent, ces champs sont ajoutés au fur et à mesure du franchissement des interfaces et/ou des canaux empruntés, dans l'ordre RA0 à RA2. Bien entendu, le nombre de ces champs est fonction du nombre maximal d'interfaces et/ou de canaux pouvant être franchis par un message.
- DIV : Cette référence englobe un ou plusieurs champs dont le nombre et le contenu sont fonction la nature du réseau, des éventuels standards de transmission mis en oeuvre, et des informations utiles transmises de l'organe émetteur à l'organe récepteur.
- FCS : Informations de contrôle de bonne réception (Contrôle de Redondance Cyclique C.R.C., ou "Check Sum" par exemple). Bien entendu, la disposition relative et le codage des différents champs du paquet peuvent être différents et leur nombre peut être différent, en fonction des standards de transmission adoptés, par exemple le champ BC peut être omis ou être disposé à un autre emplacement dans le paquet, ou sa signification peut être différente. La caractéristique importante est que le paquet comprenne des champs RAn (avec n supérieur ou égal à 0) qui sont ajoutés à chaque passage d'interface (ou à chaque changement de canal). Le contenu de chaque champ RAn sert à identifier et/ou localiser l'interface et/ou le canal de transmission actuel.

Soit par exemple à transmettre un message depuis l'organe 9 jusqu'à l'organe 15. Le message M0 circulant sur le bus 2 contient l'information 9 en tant qu'adresse de source (SA) et l'information 15 en tant qu'adresse de destinataire (DA). Le message M1 circulant sur le canal 3 comporte les informations suivantes : SA = 6, DA = 15, RA0 = 9. L'information SA = 6 est rajoutée par l'interface 6. Le message M2 circulant sur le canal 4 comporte les informations suivantes : SA = 7, DA = 15, RA0 = 9, RA1 = 6. Enfin le message M3 circulant sur le canal 5 comporte les informations suivantes : SA = 8, DA = 15, RA0 = 9, RA1=6 et RA2 = 7.

Les informations de routage ainsi programmées, ainsi que celles émises par des organes "intelligents" peuvent être introduites dans des champs spécifiques du paquet émis, ou compléter l'adresse du destinataire dans le champ DA, les champs RAn étant remplis seulement au passage des interfaces.

Un autre mode de fonctionnement consiste à faire envoyer un message par un organe "intelligent" à un destinataire quelconque et en particulier "non intelligent". Ce message arrive au destinataire muni de ces champs RA0 à RAn ajoutés au fur et à mesure du franchissement des différents points de transition. Le destinataire effectue un traitement simple sur ce message (par exemple ajout d'une information telle que "en état de marche" ou "en panne") et envoie aussitôt une réponse contenant les champs SA, DA et RA0 à RAn permutés de façon appropriée.

## Revendications

1. Procédé de routage de messages comportant les adresses de l'organe émetteur (SA) et de l'organe destinataire (DA) dans un réseau à plusieurs canaux de transmission différents (2 à 5), plusieurs organes différents (9 à 15) pouvant être rattachés à chaque canal de transmission, les différents canaux étant reliés entre eux par des points de transition, un organe rattaché à un canal pouvant communiquer avec un autre organe de n'importe quel canal du réseau, caractérisé en ce que l'on ajoute dans chaque message (16) envoyé par un organe au moins un espace (RA0 à RA2) d'identification de points de transition (6 à 8) à chaque passage d'un tel point de transition, si ledit message ne contient pas d'informations de routage lorsqu'il est émis, et en ce que lorsque les organes sont simples, ces derniers ne mémorisent pas lesdites informations de routage.

2. Procédé selon la revendication 1, caractérisé par le fait que l'organe récepteur renvoie immédiatement une réponse à un message en y incluant des champs de routage déduits du message reçu.

3. Procédé selon la revendication 1 ou 2, caractérisé par le fait que lesdits espaces comportent l'identité des points de transition franchis par le message.

4. Procédé selon l'une des revendications précédentes, caractérisé par le fait que lesdits espaces comportent l'identité des canaux franchis par le message.

5. Procédé selon l'une des revendications suivantes, caractérisé par le fait que lesdits espaces comportent l'adresse des points de transition franchis par le message.

6. Procédé selon l'une des revendications précédentes, caractérisé par le fait que lesdits espaces comportent l'adresse des canaux franchis par le message.

7. Procédé selon l'une quelconque des revendications précédentes, caractérisé par le fait que les circuits des points de transition ajoutent aux messages qui les traverse l'identité de ces points de transition respectifs.

## Claims

1. Method of routing messages comprising the addresses of the sending unit (SA) and of the destination unit (DA) in a network having several different transmission channels (2 to 5), several different units (9 to 15) being able to be attached to each transmission channel, the different channels being connected together by transition points, a unit attached to a channel being able to communicate with another unit of any channel in the network, characterized in that there is added, in each message (16) sent by a unit, at least one space (RA0 to RA2) for the identification of transition points (6 to 8) each time such a transition point is passed, if the said message contains no routing information when it is sent, and in that when the units are simple, the latter do not store the said routing information.

2. Method according to Claim 1, characterized in that the receiving unit immediately returns a response to a message, including in it routing fields derived from the received message.

3. Method according to Claim 1 or 2, characterized in that the said spaces comprise the identity of the transition points passed through by the message.

4. Method according to one of the preceding claims, characterized in that the said spaces comprise the identity of the channels passed through by the message.

5. Method according to any of the preceding claims, characterized in that the said spaces comprise the address of the transition points passed through by the message.

6. Method according to one of the preceding claims, characterized in that the said spaces comprise the address of the channels passed through by the message.

7. Method according to any one of the preceding claims, characterized in that the circuits of the transition points add to the messages which pass through them the identity of these respective transition points.

## Patentansprüche

1. Verfahren zur Leitwegbestimmung von Nachrichten, die die Adressen des sendenden Organs (SA) und des Zielorgans (DA) enthalten, in einem Netz mit mehreren verschiedenen Übertragungskanälen (2 bis 5), wobei mehrere verschiedene Organe (9, bis 15) an jeden Übertragungskanal angeschlossen sein können und die verschiedenen Kanäle miteinander über Übergangspunkte verbunden sind und wobei ein an einen Kanal angeschlossenes Organ mit einem anderen Organ eines beliebigen Kanals des Netzes in Verbindung treten kann, dadurch gekennzeichnet, daß man beim Durchgang einer Nachricht durch einen Übergangspunkt in jede Nachricht (16), die von einem Organ ausgesendet wurde, mindestens einen Platz (RA0 bis RA2) zur Identifizierung von Übergangspunkten (6 bis 8) hinzufügt, wenn die Nachricht nicht bereits Leitweginformationen bei der Aussendung enthält, und daß diese Leitweginformationen nicht gespeichert werden, wenn die Organe einfache Organe sind.

2. Verfahren nach Anspruch 1, dadurch gekennzeichnet, daß das Empfangsorgan sofort eine Antwort auf eine Nachricht aussendet und in diese Antwort Leitwegfelder einschließt, die aus der empfangenen Nachricht abgeleitet sind.

3. Verfahren nach Anspruch 1 oder 2, dadurch gekennzeichnet, daß die Identifikationsplätze die Identität der von der Nachricht durchlaufenden Übergangspunkte enthalten.

4. Verfahren nach einem der vorhergehenden Ansprüche, dadurch gekennzeichnet, daß die Identifikationsplätze die Identität der von der Nachricht durchlaufenen Kanäle enthalten.

5. Verfahren nach einem der vorhergehenden Ansprüche, dadurch gekennzeichnet, daß die Identifikationsplätze die Adresse der von der Nachricht durchlaufenen Übergangspunkte enthalten.

6. Verfahren nach einem der vorhergehenden Ansprüche, dadurch gekennzeichnet, daß die Identifikationsplätze die Adresse der von der Nachricht durchlaufenen Kanäle enthalten.

7. Verfahren nach einem beliebigen der vorhergehenden Ansprüche, dadurch gekennzeichnet, daß die Schaltungen der Übergangspunkte in die durch sie verlaufenden Nachrichten die Identität dieser jeweiligen Übergangspunkte einfügen.
